# EUROPEAN PATENT APPLICATION

(11) **EP 4 368 081 A1**
(43) Date of publication of application: **15.05.2024**
(21) Application number: 22837804.8
(22) Date of filing: 04.05.2022
(51) Int. Cl.: A47J 37/06, H05B 6/12

(54) **IH AIR FRYER**

(30) Priority: 09.07.2021 KR 20210090041
(71) Applicant: Lee, Dong Woo, Seoul 06666 (KR)
(72) Inventor: Lee, Dong Woo, Seoul 06666 (KR)
(74) Representative: Ter Meer Steinmeister & Partner
(86) International application number: PCT/KR2022/006407
(87) International publication number: WO 2023/282450

(57) **Abstract**

The present invention relates to an induction heating (IH) air fryer, and more particularly, to an IH air fryer, including: an IH unit that includes a housing and an IH coil provided inside the housing to enable heating by electromagnetic induction; a circulation unit that is disposed on one side of the IH unit, has a body formed of a magnetic material so that it may be heated by an eddy current, and circulates a fluid so that heat energy heated by the IH unit may be transferred to food; and a loading unit that is disposed on one side of the circulation unit and includes a hollow receiving space so that food may be loaded and cooked therein, wherein the IH unit includes a driving unit that is disposed inside the housing, a first rotating unit that is connected to the driving unit and rotates and includes a magnetic material, and a second rotating unit that is formed of a magnetic counterpart corresponding to the magnetic material of the first rotating unit, and is configured to change a position of the magnetic material according to a rotation of the first rotating unit, and rotate the magnetic counterpart by magnetic force according to a displacement of the magnetic material so that the second rotating unit may rotate in a non-contact manner.

## Description

### [Technical Field]

The present invention relates to an induction heating (IH) air fryer, and more particularly, to an IH air fryer including: an IH (Induction Heating) unit that includes a housing and an IH coil provided inside the housing to enable heating by electromagnetic induction; a circulation unit that is disposed on one side of the IH unit, has a body formed of a magnetic material so that it may be heated by an eddy current, and circulates a fluid so that heat energy heated by the IH unit may be transferred to food; and a loading unit that is disposed on one side of the circulation unit and includes a hollow receiving space so that food may be loaded and cooked therein, wherein the IH unit includes a driving unit that is disposed inside the housing and a first rotating unit that is connected to the driving unit and rotates and includes a magnetic material, and the circulation unit includes a second rotating unit that is formed of a magnetic counterpart corresponding to the magnetic material of the first rotating unit, and is configured to change a position of the magnetic material according to a rotation of the first rotating unit, and rotate the magnetic counterpart by magnetic force according to a displacement of the magnetic material so that the second rotating unit may rotate in a non-contact manner.

### [Background Art]

The contents described in this section merely provide background information of the present invention and do not constitute the related art.

To cook fried foods such as French fries, whole chicken, or pork cutlet in a restaurant or at home, it is common to heat a cooking pan containing cooking oil, heat the cooking oil to a certain temperature or higher, then put a cooking object in the cooking oil and fry the cooking object.

The cooking object may be prepared from frozen, refrigerated, room temperature, or warm temperature conditions. A typical high-efficiency fat oil fryer commonly used in fast food environments cooks approximately 0.68 kg of frozen 0.25 inch fry in approximately 3 minutes and 30 seconds, and the throughput of the fryer is approximately 27.22 kg/hr.

However, as interest in health has recently increased, consumers place a high value on healthy foods prepared using less oil or fat. However, due to the unique nutty that can only be tasted in fried foods, the fried foods are harmful to health, but are still very popular.

The air fryer recently designed to reflect these concerns can cook crispy fried food using hot, high-temperature air without oil. The unique combination of oven components and fast circulating air allows users to cook fries quickly and easily.

In general, an air fryer uses only air, and thus, produces less odor and steam, is easy to use on a daily basis, and is safe and economical, compared to the traditional frying pan.

However, the conventional air fryer has certain defects during use.

In the case of the conventional air fryer, a shape of a heating container is complex and the heating container is heavy, making it inconvenient to clean after cooking, and the heating container has many sharp parts, causing injuries during the cleaning process.

Meanwhile, since a fan part that circulates hot air is cumbersome to attach and detach, cleaning is inconvenient. As a result, improvement measures are required for this. In addition, since the hot air and the fan are separated, there was a problem of low heat transfer efficiency.

In order to solve the problems of the conventional air fryer described above, some domestic and overseas related companies have conducted research on an air fryer with an easy fan removal and increased heat transfer efficiency, but the costs consumed to build the structure for actual commercialization of the researched air fryer were excessive, or even if not, the cost-effectiveness of the air fryer is not large. As a result, compared to the conventional air fryers, the market competitiveness of the air fryer was low, so no cases of full-scale commercialization were found.

Therefore, there is a need to develop an apparatus that can solve the problems of the related art as described above.

### [Disclosure]

### [Technical Problem]

The problem to be solved by the present invention is to make up for the shortcomings of the prior art described above, and the object of the present invention is as follows.

First, the present invention is to provide an induction heating (IH) air fryer with increased heat transfer efficiency by allowing a circulation unit heated by an IH unit to directly supply hot air and at the same time rotating the circulation unit to minimize the number of components.

Second, the present invention provides an IH air fryer with increased durability and simplified wiring circuit by rotating a circulation unit equipped with a magnetic counterpart in a non-contact manner by magnetic force as a magnetic material provided in a sealed IH unit rotates.

Third, the present invention provides an IH air fryer that is easy to clean and maintain cleanliness and hygiene by simply detaching a circulation unit from an IH unit.

Problems of the present invention are not limited to the above-described problems, and other problems that are not described above may be obviously understood by those skilled in the art from the following specification.

### [Technical Solution]

In an aspect of the present invention, an induction heating (IH) air fryer may include: an IH unit that includes a housing and an IH coil provided inside the housing to enable heating by electromagnetic induction; a circulation unit that is disposed on one side of the IH unit, has a body formed of a magnetic material so that the circulation unit is heated by an eddy current, and circulates a fluid so that heat energy heated by the IH unit is transferred to food; and a loading unit that is disposed on one side of the circulation unit and includes a hollow receiving space so that food is loaded and cooked therein.

In this case, the IH unit may include a driving unit that is disposed inside the housing and a first rotating unit that is connected to the driving unit and rotates and includes a magnetic material, the circulation unit may include a second rotating unit that is formed of a magnetic counterpart corresponding to the magnetic material of the first rotating unit, and is configured to change a position of the magnetic material according to a rotation of the first rotating unit, and rotate the magnetic counterpart by magnetic force according to a displacement of the magnetic material so that the second rotating unit may rotate in a non-contact manner.

In addition, the housing may include a coupling part formed on one surface of the housing, and the second rotating unit may include a coupled part that is detachably connected to the coupling part so that the body contaminated by cooking may be cleaned.

Further, the loading unit may have the magnetic counterpart corresponding to the magnetic material of the first rotating unit, include the hollow receiving space so that food may be loaded therein, and include a third rotating unit rotatably insertable into the loading unit, and is configured to change a position of the magnetic material according to a rotation of the first rotating unit, and rotate the magnetic counterpart by magnetic force according to a displacement of the magnetic material so that the third rotating unit may rotate in a non-contact manner.

Meanwhile, the IH unit may include a driving unit that is disposed inside the housing, and the circulation unit may include a second rotating unit that is directly connected to one side of the driving unit and rotates.

In this case, the loading unit may be directly connected to one side of the driving unit, include the hollow receiving space so that food may be loaded therein, and include a third rotating unit rotatably insertable into the loading unit.

Additional solutions of the present invention will be partially described in the description below, and may be partially easily identified from the description or learned by practice of the present invention.

Both the foregoing general description and the following detailed description are merely exemplary and explanatory only and do not limit the invention as set forth in the claims.

### [Advantageous Effects]

The effects of the present invention configured as above will be described as follows.

First, it is possible to increase heat transfer efficiency by allowing a circulation unit heated by an IH unit to directly supply hot air and at the same time rotating the circulation unit to minimize the number of components.

Second, it is possible to increase durability and simplify a wiring circuit by rotating a circulation unit equipped with a magnetic counterpart in a non-contact manner by magnetic force as a magnetic material provided in a sealed IH unit rotates.

Third, it is possible to facilitate cleaning and cleanliness and hygiene management by simply detaching a circulation unit from an IH unit.

The effects of the present invention are not limited to the above-described effects, and other effects that are not described may be obviously understood by those skilled in the art from the claims.

### [Brief Description of the Drawings]

FIG. 1 is a perspective view of an induction heating (IH) air fryer according to an embodiment of the present invention.
FIGS. 2 and 3 are perspective views illustrating various embodiments of the present invention.
FIG. 4 is a perspective view of a coupling part and a coupled part according to an embodiment of the present invention.
FIG. 5 is a perspective view of a stirring unit according to an embodiment of the present invention.

### [Best Mode]

Hereinafter, specific embodiments of the present disclosure will be described in detail with reference to the accompanying drawings.

However, in describing specific embodiments of the present invention, detailed descriptions of well-known functions or configurations will be omitted so as not to obscure the description of the present invention with unnecessary detail.

Objects, features, and advantages of the present invention will become more obvious from the following detailed description provided in relation to the accompanying drawings. However, the present application may be variously modified and have several exemplary embodiments. Hereinafter, specific exemplary embodiments of the present invention will be illustrated in the accompanying drawings and be described in detail.

When it is determined that a detailed description for the known functions or configurations related to the present invention may obscure the gist of the present invention, detailed descriptions thereof will be omitted. In addition, numerals used in an explanation process of the present specification are only reference numerals for distinguishing one component from another component.

In addition, the term "unit" for components used in the following description is used only to easily make the disclosure. Therefore, the term does not have meanings or roles that distinguish from each other in itself.

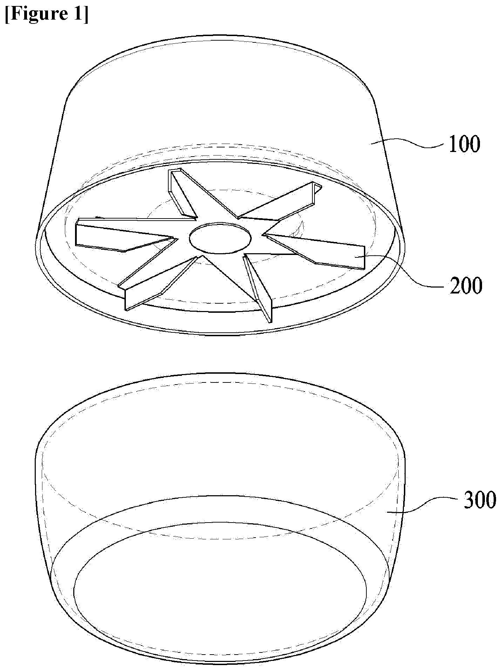

FIG. 1 is a perspective view of an induction heating (IH) air fryer according to an embodiment of the present invention.

The IH air fryer according to an embodiment of the present invention may include an IH unit 100, a circulation unit 200, and a loading unit 300.

The IH unit 100 may include a housing 110 and an IH coil 190.

The housing 110 may be formed of a rigid body (e.g., metal such as iron, aluminum, and copper, or synthetic resins such as polystyrene (PS), ABS, polyacetal (POM), polyethylene (PE), polyvinyl chloride (PVC), polycarbonate (PC), polycaprolactone (PCL), and polypropylene (PP) may be selected).

The housing 110 may be formed in a cylindrical shape as illustrated in FIG. 1, but alternatively, may be formed in a polygonal shape.

The housing 110 may be manufactured in a prefabricated manner or may be formed as one piece so that the IH coil 190, a first rotating body, and a driving unit 120 may be inserted therein.

The IH coil 190 is provided inside the housing 110 and may heat the circulation unit 200 using electromagnetic induction.

The circulation unit 200 may be disposed on one side of the IH unit 100 and has a body formed of magnetic material A so that it may be heated by an eddy current generated from the IH unit 100.

The circulation unit 200 may circulate a fluid in a loading unit 300 disposed below the circulation unit 200 to transfer heat energy generated from the IH unit 100 to food. As a means to circulate a fluid, as illustrated in FIG. 1, a fan formed in a shape of a cylinder with a hollow receiving space may be preferably selected. In the fan, an inner peripheral surface of the cylinder rotates to form wind or a porous perforated groove is formed on the inner peripheral surface of the cylinder, and a driving unit 120, such as an engine, provided therein may circulate a fluid.

A loading unit 130 is disposed on one side of the circulation unit 200 and includes a hollow receiving space so that food is loaded and cooked therein.

A temperature sensor is provided inside the housing 110, and a display unit of a control unit disposed on the outside of the housing 110 allows a user to set the circulation unit 200 to the desired temperature for cooking and then start an operation of the circulation unit 200.

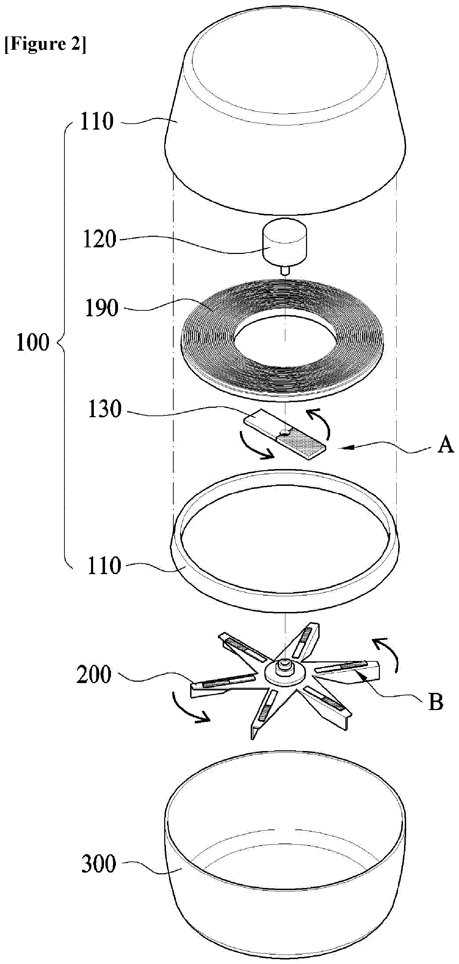

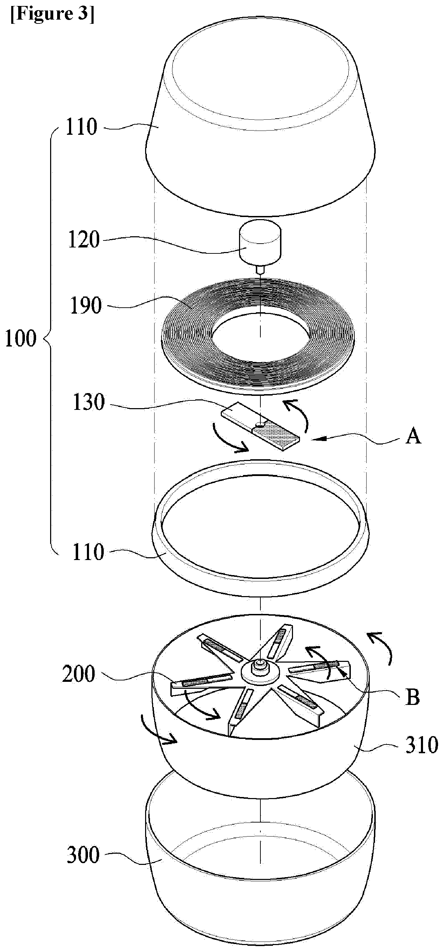

FIGS. 2 and 3 are perspective views illustrating various embodiments of the present invention.

The IH unit 100 may include the driving unit 120 and the first rotating unit 130.

The circulation unit 200 may include a second rotating unit 210.

The first rotating unit 130 may include the magnetic material A, and the second rotating unit 210 may include a magnetic counterpart B corresponding to the magnetic material A.

More specifically, in the IH unit 100, as illustrated in FIG. 2, the driving unit 120 may be disposed inside housing 110. The first rotating unit 130 may be connected to the driving unit 120 and rotate and have the magnetic material A on one surface thereof, and the second rotating unit 210 may have the magnetic counterpart B corresponding to the magnetic material A of the first rotating unit 130 on one surface thereof. As the driving unit 120 operates and the first rotating unit 130 rotates, the position of the magnetic material A changes, and the magnetic counterpart B may rotate by magnetic force according to the displacement of the magnetic material (A).

As illustrated in FIG. 2, it may include a panel part that protrudes from one surface of the second rotating unit 210 toward a lower surface of the loading unit 300 with a predetermined slope so that a circulation rate of convection may increase.

The panel part may have a shape whose height gradually decreases from the outside of the second rotating unit 210 toward the center.

The second rotating unit 210 may have a shape whose width gradually decreases as it moves outward from the center.

As a result, the body of the second rotating unit 210 is heated by the IH unit 100 in the electromagnetic induction manner, and as the first rotating unit 130 rotates, the second rotating unit 210 may rotate in a non-contact manner, and the circulation unit 200 heated by the IH unit 100 directly supplies hot air to the loading unit 300 and at the same time rotates to minimize the number of components, thereby increasing the heat transfer efficiency and shortening the cooking time.

The loading unit 300 of the IH air fryer according to another embodiment of the present invention may include a third rotating unit 310.

The third rotating unit 310 may include the magnetic counterpart B corresponding to the magnetic material A.

More specifically, in the IH unit 100, as illustrated in FIG. 3, the driving unit 120 may be disposed inside housing 110. The first rotating unit 130 may be connected to the driving unit 120 and rotate and have the magnetic material A on one surface thereof, and the second rotating unit 310 may have the magnetic counterpart B corresponding to the magnetic material A of the first rotating unit 130 on one surface thereof. As the driving unit 120 operates and the first rotating unit 130 rotates, the position of the magnetic material A changes, and the magnetic counterpart B may rotate by magnetic force according to the displacement of the magnetic material (A).

As a result, the conventional air fryer has a problem in that the hot air and the fan are separated, so the efficiency of heat transfer is low, and cleaning is inconvenient because the fan part that circulates the hot air is difficult to attach and detach. However, in the IH air fryer according to an embodiment of the present invention, the body of the second rotating unit 210 and the third rotating unit 310 is heated by the IH unit 100 in the electromagnetic induction manner, and as the first rotating unit 130 rotates, the second rotating unit 210 and the third rotating unit 310 may rotate together in a non-contact manner, and the circulation unit 200 and the loading unit 300 heated by the IH unit 100 directly supplies hot air to the loading unit 300 and at the same time rotates to minimize the number of components, thereby increasing the heat transfer efficiency and shortening the cooking time.

Further, it is possible to increase the durability and simplify the wiring circuit by rotating the circulation unit 200 equipped with the magnetic counterpart B in a non-contact manner by the magnetic force as the magnetic material A provided in the sealed IH unit 100 rotates.

According to another embodiment of the present invention, the circulation unit 200 may include the second rotating unit 210 that is directly connected to one side of the driving unit 120 and rotates, and the loading unit 300 may be directly connected to one side of the driving unit 120, include the hollow receiving space so that food may be loaded therein, and include a third rotation unit 310 rotatably insertable into the loading unit 300.

More specifically, unlike illustrated in FIGS. 2 and 3, the driving unit 120 disposed inside the housing 110 may be directly connected to the second rotating unit 210 or the third rotating unit 310. The circulation efficiency may be increased by rotating the second rotating unit 210 or third rotating unit 310 by the direct connection manner, and additional components such as the magnetic material A and the magnetic counterpart B are not required, so productivity may be improved and production costs may be reduced.

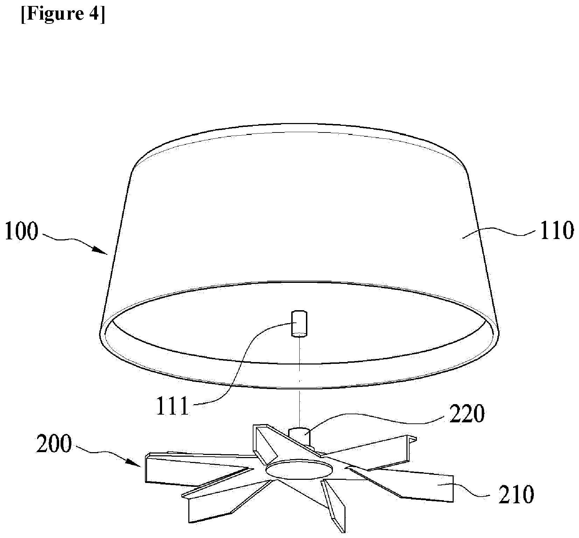

FIG. 4 is a perspective view of a coupling part 111 and a coupled part 220 according to an embodiment of the present invention.

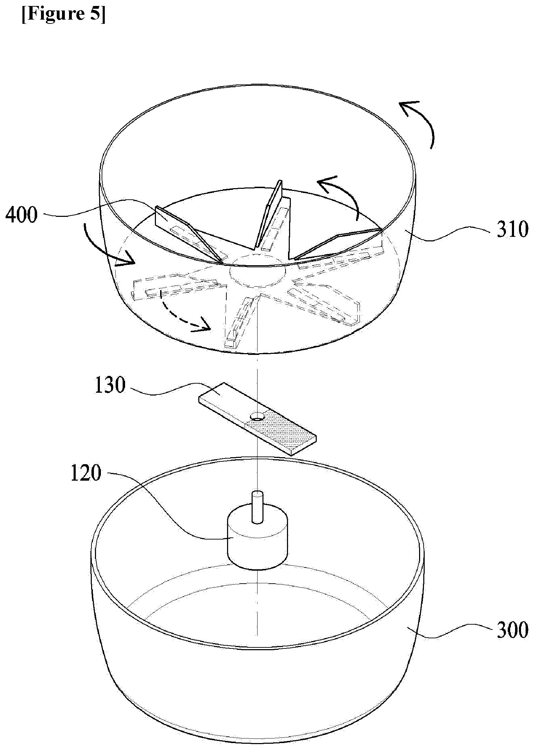

FIG. 5 is a perspective view of a stirring unit 400 according to an embodiment of the present invention.

The housing 110 may include the coupling part 111 formed on one surface of the housing 110, and the second rotating unit 210 may include the coupled part 220 that is detachably connected to the coupling part 111 so that the body contaminated by cooking may be cleaned.

As a result, it is possible to facilitate washing and cleanliness and hygiene management by simply detaching the circulation unit 200 from the IH unit 100.

The loading unit 300 may include the driving unit 120 that is disposed between the lower surface of the loading unit 300 and the third rotating unit 310 and the first rotation unit 130 that is connected to the driving unit 120 and rotates and includes the magnetic material A.

The loading unit 300 may include the stirring unit 400 that is disposed inside the third rotating unit 310 to stir the food, and includes the magnetic counterpart B.

More specifically, as illustrated in FIG. 5, the driving unit 120 may be disposed between the lower surface of the loading unit 300 and the third rotating unit 310. The first rotating unit 130 may be connected to the driving unit 120 and rotates and have the magnetic material A on one surface thereof, and the stirring unit 400 may have the magnetic counterpart B corresponding to the magnetic material A of the first rotating unit 130 on one surface thereof. As the driving unit 120 operates and the first rotating unit 130 rotates, the position of the magnetic material A changes, and the magnetic counterpart B may rotate by magnetic force according to the displacement of the magnetic material (A).

As a result, in the IH air fryer according to an embodiment of the present invention, regarding the first rotating unit 130 and the stirring unit 400, since the stirring unit 400 may rotate in the non-contact manner as the first rotating unit 130 rotates, food is evenly stirred so that all food may be heated and cooked evenly without sticking, and since the stirring unit 400 rotates in the non-contact manner, it is easy to wash and keep clean.

This embodiment merely illustratively describes the technical idea of the present invention. It will be appreciated by those skilled in the art that various modifications and alterations may be made without departing from the essential characteristics of the present disclosure.

This embodiment is not intended to limit the technical idea of the present invention, but to explain the present invention, and therefore the scope of the present invention is not limited by this embodiment.

The scope of protection of the present invention should be construed by claims, and all technical ideas that are equivalent or equivalent thereto shall be construed as being included in the scope of rights of the present invention.

### [Description of reference numerals]

- A -: Magnetic material
- B -: Magnetic counterpart
- 100 -: IH unit
- 110 -: Housing
- 111 -: Coupling part
- 120 -: Driving unit
- 130 -: First rotating unit
- 190 -: IH coil
- 200 -: Circulation unit
- 210 -: Second rotating unit
- 220 -: Coupled part
- 300 -: Loading unit
- 310 -: Third rotating unit
- 400 -: Stirring unit

## Claims

1. An induction heating (IH) air fryer, comprising:
an IH unit that comprises a housing and an IH coil provided inside the housing to enable heating by electromagnetic induction;
a circulation unit that is disposed on one side of the IH unit, has a body formed of a magnetic material so that the circulation unit is heated by an eddy current, and circulates a fluid so that heat energy heated by the IH unit is transferred to food; and
a loading unit that is disposed on one side of the circulation unit and includes a hollow receiving space so that food is loaded and cooked therein.

2. The IH air fryer of claim 1, wherein the IH unit comprises a driving unit that is disposed inside the housing and a first rotating unit that is connected to the driving unit and rotates and includes a magnetic material, and
the circulation unit comprises a second rotating unit that is formed of a magnetic counterpart corresponding to the magnetic material of the first rotating unit, and
is configured to change a position of the magnetic material according to a rotation of the first rotating unit, and rotates the magnetic counterpart by magnetic force according to a displacement of the magnetic material so that the second rotating unit rotates in a non-contact manner.

3. The IH air fryer of claim 2, wherein the housing comprises a coupling part that is formed on one surface of the housing, and
the second rotating unit comprises a coupled part that is detachably connected to the coupling part so that the body contaminated by cooking is washed.

4. The IH air fryer of claim 2, wherein the loading unit has the magnetic counterpart corresponding to the magnetic material of the first rotating unit, and comprises the hollow receiving space so that food is loaded therein, and a third rotating unit rotatably insertable into the loading unit, and
is configured to change a position of the magnetic material according to a rotation of the first rotating unit, and rotates the magnetic counterpart by magnetic force according to a displacement of the magnetic material so that the third rotating unit rotates in a non-contact manner.

5. The IH air fryer of claim 1, wherein the IH unit comprises a driving unit that is disposed inside the housing, and
the circulation unit comprises a second rotating unit that is directly connected to one side of the driving unit and rotates.

6. The IH air fryer of claim 5, wherein the loading unit is directly connected to one side of the driving unit, and comprises the hollow receiving space so that food is loaded therein, and a third rotating unit rotatably insertable into the loading unit.

7. The IH air fryer of claim 4, wherein the loading unit comprises: a driving unit that is disposed between a lower surface of the loading unit and the third rotating unit; a first rotating unit that is connected to the driving unit and rotates and comprises a magnetic material; and a stirring unit that is disposed inside the third rotating unit to stir food and comprises the magnetic counterpart, and
is configured to change the position of the magnetic material according to a rotation of the first rotating unit, and rotate the magnetic counterpart by the magnetic force according to the displacement of the magnetic material so that the stirring unit rotates in a non-contact manner.
